# EUROPÄISCHE PATENTSCHRIFT

(11) **EP 2 040 881 B1**
(45) Veröffentlichungstag und Bekanntmachung des Hinweises auf die Patenterteilung: **08.07.2015**
(21) Anmeldenummer: 07786109.4
(22) Anmeldetag: 17.07.2007
(51) Int. Cl.: B24B 33/02, B24B 33/06, B24B 33/08, B23Q 17/22

(54) **VERFAHREN ZUR KOMBINIERTEN FEINBOHR- UND HONBEARBEITUNG SOWIE BERABEITUNGSANLAGE ZUR DURCHFÜHRUNG DES VERFAHRENS**
METHOD FOR MACHINING THAT COMBINES FINE BORING AND HONING AND MACHINING EQUIPMENT FOR THE EXECUTION OF THE METHOD
PROCÉDÉ D'USINAGE COMBINÉ PAR PERÇAGE DE PRÉCISION ET RODAGE AINSI QU'INSTALLATION D'USINAGE POUR LA MISE EN OEUVRE DU PROCÉDÉ

(30) Priorität: 19.07.2006 DE 102006034497
(43) Veröffentlichungstag der Anmeldung: 01.04.2009
(73) Patentinhaber: Nagel Maschinen- und Werkzeugfabrik GmbH, 72622 Nürtingen (DE)
(72) Erfinder: NAGEL, Bernd, 72622 Nürtingen (DE); WEIGMANN, Uwe-Peter, 72622 Nürtingen (DE)
(74) Vertreter: Patentanwälte Ruff, Wilhelm, Beier, Dauster & Partner
(86) Internationale Anmeldenummer: PCT/EP2007/006309
(87) Internationale Veröffentlichungsnummer: WO 2008/009411

(56) Entgegenhaltungen:
- EP-A2- 0 463 427
- DE-A1- 3 835 185
- DE-A1- 10 315 218
- JP-A- 2004 114 236

## Beschreibung

Die Erfindung bezieht sich auf ein Verfahren zur Feinbearbeitung zylindrischer Innenflächen von Bohrungen in Werkstücken durch Feinbohren und nachfolgendes Honen sowie auf eine Bearbeitungsanlage zur Durchführung des Verfahrens. Bevorzugtes Anwendungsgebiet ist die Feinbearbeitung von im Wesentlichen zylindrischen Gleitlagerflächen in Bauteilen für den Motorenbau, insbesondere die Bearbeitung von Zylinderlaufflächen eines Motorblockes oder die Bearbeitung von Pleuelaugen in Pleueln.

Das klassische Honen ist ein Zerspanungsverfahren mit geometrisch unbestimmten Schneiden, bei dem vielschneidige Honwerkzeuge eine aus zwei Komponenten bestehende Schnittbewegung ausführen, die zu einer charakteristischen Oberflächenstruktur der bearbeiteten Innenfläche mit überkreuzten Bearbeitungsspuren führt. Durch Honen sind endbearbeitete Oberflächen herstellbar, die extrem hohen Anforderungen bezüglich Maß- und Formtoleranzen sowie hinsichtlich der Oberflächenstruktur genügen. Dementsprechend werden beispielsweise beim Motorenbau Zylinderlaufflächen, d.h. Innenflächen von Zylinderbohrungen in einem Motorblock oder in einer in einen Motorblock einzubauenden Zylinderhülse, Lagerflächen für Wellen und die zylindrischen Innenflächen in Pleuelaugen einer Honbearbeitung unterzogen. Bei der Bearbeitung von Zylinderlaufflächen werden typischerweise mehrere, unterschiedliche, aufeinanderfolgende Honoperationen durchgeführt, beispielsweise ein Vorhonen mit relativ starkem Materialabtrag zur Erzeugung der gewünschten Makroform der Bohrung und ein Fertighonen mit geringerem Materialabtrag, um die am fertigen Werkstück benötigte Oberflächenstruktur zu erzeugen.

Der Begriff "Honen" soll im Rahmen dieser Anmeldung nicht nur das klassische Honen, sondern auch andere für die Herstellung definierter Oberflächeneigenschaften verwendete Endbearbeitungsverfahren umfassen, insbesondere die Oberflächenstrukturierung mit Hilfe von Laserstrahlung, die in Verbindung mit klassischen Honoperationen genutzt werden kann, das Bürsten von Oberflächen und/oder die Umwandlung oberflächennaher Bereiche mittels Laserstrahl, ebenfalls ggf. in Kombination mit einer oder mehreren klassischen Honoperationen.

Zur Vorbereitung der zu bearbeitenden Werkstücke für das Honen kann den Honoperationen eine Vorbearbeitung durch Feinbohren vorgeschaltet sein, die manchmal auch als Feindrehen oder Feinspindeln bezeichnet wird. Beispielsweise wird manchmal bei der Bearbeitung von Pleueln zwischen dem Bruchtrennen und dem zur Enbearbeitung dienenden Honen eine Feindrehbearbeitung zwischengeschaltet. Geeignete Feinbohr-Operationen dienen dazu, die gewünschte Position und Winkellage der Bohrung festzulegen. Damit kann in der nachfolgenden Honoperation der Bohrung mit einem kardanisch oder auf andere Weise begrenzt beweglich gelagerten Honwerkzeug der durch die Feinbohroperation festgelegten Bohrungsachse nachgefahren werden. Eine wesentliche Aufgabe der Honoperation mit einem im Vergleich zum Feinbohren geringeren Aufmaß ist die Erzeugung der geforderten Oberflächenrauheit, der Zylinderform und des Durchmessers.

Die japanische Patentanmeldung JP 2004-114236 A beschreibt ein Verfahren und eine Vorrichtung zur Feinbearbeitung von Zylinderlaufflächen in Motorblöcken durch Feinbohren und nachfolgendes Honen. Die verwendete Bearbeitungsanlage hat eine Feinbohreinrichtung mit einer Feinbohr-Arbeitsspindel, an der ein Feinbohrwerkzeug angebracht ist, sowie eine Honeinrichtung mit zwei Honspindeln, an denen ein Vorhon-Werkzeug bzw. ein Fertighon-Werkzeug angebracht ist. Zwischen der Feinbohr-Arbeitsspindel und der für das Vorhonen vorgesehenen Honspindel ist ein gesondertes Messsystem vorgesehen, mit dem die Zylindrizität der feingebohrten Bohrung vor dem Honen vermessen wird. Auf Basis des Messergebnisses wird ein Zylindrizitätsfehler abgeschätzt. Die nachfolgenden Honoperationen werden auf Basis des ermittelten Zylindrizitätsfehlers so gesteuert, dass der Zylindrizitätsfehler korrigiert werden kann.

Eine kombinierte Feinbohr- und Honvorrichtung mit einer Feinbohrspindel, einer zwischengeschalteten Messspindel und nur einer Honspindel ist in der japanischen Patentanmeldung JP 09-254011 gezeigt.

Die DE 103 15 218 A1 beschreibt ein Verfahren und eine Vorrichtung zur Feinbearbeitung einer Oberfläche eines Werkstücks am Beispiel einer Honbearbeitung. Bei dem Verfahren findet eine Regelung wenigstens eines die Oberflächenbeschaffenheit beschreibenden Oberflächenparameters, insbesondere eine Regelung der Rauheit, statt.

Es ist eine Aufgabe der vorliegenden Erfindung, ein Verfahren zur kombinierten Feinbohr- und Honbearbeitung von Innenflächen von Bohrungen sowie eine zur Durchführung des Verfahrens geeignete Bearbeitungsanlage bereitzustellen, die bei einfacher Konstruktion der Bearbeitungsanlage eine schnelle und hochgenaue Bearbeitung von zylindrischen Innenflächen mittels Feinbohren und nachfolgendem ein- oder mehrstufigem Honen ermöglichen.

Zur Lösung dieser und anderer Aufgaben stellt die Erfindung ein Verfahren mit den Merkmalen von Anspruch 1 sowie eine Bearbeitungsanlage mit den Merkmalen von Anspruch 11 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Gemäß einer Formulierung der Erfindung hat ein Verfahren zur Feinbehandlung von Innenflächen von Bohrungen in Werkstücken durch Feinbohren und nachfolgendes Honen folgende Schritte:
Feinbohren mindestens einer Bohrung eines Werkstückes mittels eines Feinbohrwerkzeuges einer Feinbohreinrichtung zur Erzeugung einer feingebohrten Bohrung;
Transfer des Werkstückes in eine Bearbeitungsposition einer Honeinrichtung zur Bearbeitung der feingebohrten Bohrung mittels eines Honwerkzeuges der Honeinrichtung;
Messen der feingebohrten Bohrung mittels einer der Honeinrichtung zugeordneten Messeinrichtung in der Bearbeitungsposition zur Erzeugung mindestens eines die Eigenschaften der feingebohrten Bohrung repräsentierenden Bohrungs-Messsignals; und
Steuerung des Betriebs der Feinbohreinrichtung in Abhängigkeit von dem Bohrungs-Messsignal.

Eine zur Durchführung des Verfahrens geeignete Bearbeitungsanlage zum Feinbearbeiten zylindrischer Innenflächen von Bohrungen in Werkstücken durch Feinbohren und nachfolgendes Honen umfasst: eine Feinbohreinrichtung mit mindestens einer Feinbohrspindel zum Tragen eines Feinbohrwerkzeuges sowie eine Feinbohrsteuerung zur Steuerung des Betriebs der Feinbohreinrichtung;
eine Honeinrichtung mit mindestens einer zum Tragen eines Honwerkzeuges eingerichteten Honspindel sowie einer Honsteuerung zur Steuerung des Betriebs der Honeinrichtung;
wobei die Honeinrichtung mindestens eine Messeinrichtung zur Messung einer durch die Feinbohreinrichtung bearbeiteten feingebohrten Bohrung und zur Erzeugung eines die Beschaffenheit der feingebohrten Bohrung repräsentierenden Bohrungs-Messsignals aufweist und die Feinbohrsteuerung zur Steuerung des Betriebs des Feinbohreinrichtung in Abhängigkeit von dem Bohrungs-Messsignal konfiguriert ist.

Bei dem Verfahren wird eine nach der Feinbohroperation angeordnete, zur Honeinrichtung gehörende Messeinrichtung dazu verwendet, das Bearbeitungsergebnis der vorangegangenen Feinbohroperation zu ermitteln. Das Bohrungs-Messsignal kann insbesondere Informationen über den Durchmesser und die Makroform der nach dem Feinbohren vorliegenden feingebohrten Bohrung enthalten, z.B. in Bezug auf Maßgenauigkeit, Rundheit, Zylindrizität und/oder Profilierung in Axialrichtung (Konizität, Tonnenform, Vorweite, etc.). Gegebenenfalls können auch Informationen über die Lage der Bohrung in Bezug auf eine Soll-Lage und/oder Informationen über die Oberflächenbeschaffenheit enthalten sein.

Das Messen der feingebohrten Bohrung mittels einer der Honeinrichtung zugeordneten Messeinrichtung, d.h. die Ausgangskontrolle der Feinbohroperation, erfolgt in der für die nachfolgende Honbearbeitung vorgesehenen Bearbeitungsposition des Werkstückes, so dass ein Transfer von der Feinbearbeitungseinrichtung zur Honeinrichtung gegebenenfalls ohne Zwischenstop und damit sehr schnell erfolgen kann.

In konstruktiver Hinsicht kann die bisher übliche gesonderte Messstation zwischen Feinbohreinrichtung und Honeinrichtung und/oder eine der Feinbohreinrichtung zugeordnete Messeinrichtung eingespart werden, da die Ausgangskontrolle des Feinbohrens mit Hilfe der zur Honeinrichtung gehörenden Messeinrichtung erfolgt.

Es kann beispielsweise eine Honeinrichtung vorgesehen sein, die eine integrierte Messeinrichtung enthält, um eine In-Prozess-Durchmessermessung zur Durchmesserabschaltung des Honprozesses und zur In-Prozess-Korrektur der Bohrungsform zu ermöglichen. Diese In-Prozess-Durchmessermesseinrichtung kann genutzt werden, um vor Beginn der Honbearbeitung bzw. in der Anfangsphase der Honbearbeitung in einer oder mehreren Messebenen den Durchmesser der feingebohrten Bohrung zu erfassen und ein entsprechendes Bohrungs-Messsignal zu erzeugen, das die feingebohrte Bohrung beschreibt. Dieses Bohrungs-Messsignal (oder ein daraus abgeleitetes Signal) kann zur Verschleißkompensation an die Feinbohreinrichtung zurückgeführt werden.

Für die Messung der feingebohrten Bohrung ist in vielen Fällen eine relativ hohe Messgenauigkeit vorteilhaft, um eine präzise Steuerung der nachfolgenden Honoperationen zu erlauben. Vorzugsweise wird die feingebohrte Bohrung mit einer Messgenauigkeit von weniger als 10 µm (bezogen auf den Durchmesser) vermessen, wobei die Messgenauigkeit insbesondere im Bereich zwischen 2µm und 6µm liegen kann.

Bei einer Verfahrensvariante wird die feingebohrte Bohrung mit Hilfe mindestens eines an einem Honwerkzeug angebrachten Messsensor vermessen. Das Honwerkzeug, d.h. das Bearbeitungswerkzeug, dient somit als Sensorträger für den Messsensor, so dass die zugeordnete Honspindel und ihre Steuerung dazu genutzt werden können, den Messsensor in die feingebohrte Bohrung einzuführen, gegebenenfalls den Messsensor innerhalb der feingebohrten Bohrung für die Messung zu bewegen und auch nach Abschluss der Messung den Messsensor wieder aus der Bohrung herauszuführen. Erheblicher konstruktiver Aufwand für eine gesonderte Messstation kann somit eingespart werden.

Gegebenenfalls kann der an dem Honwerkzeug angebrachte Messsensor nach Abschluss der Messung der noch nicht mit Honen bearbeitenden feingebohrten Bohrung auch dazu genutzt werden, während einer nachgefolgten Honoperation den Fortschritt der Honoperation zu überwachen. Es kann sich somit ein mehrfacher Nutzen der zur Honeinrichtung gehörenden Messeinrichtung ergeben, bei gleichzeitig verringertem Aufwand hinsichtlich der für die Manipulation des Messsensors erforderlichen Einrichtungen.

Bei vielen Honprozessen vergehen nach dem Start des Honprozesses einige Zehntelsekunden oder ganze Sekunden, bis das Honwerkzeug bzw. die an dem Honwerkzeug angebrachten Bearbeitungselemente (insbesondere Honleisten, Honsteine) in Bearbeitungseingriff mit der Werkstückoberfläche kommen und damit die feingebohrte Bohrung verändern. Zudem wird häufig die Bohrung während der ersten Zehntelsekunden oder ganzen Sekunden des Honeingriffes nur geringfügig verändert. Daher kann die Zwischenzeit zwischen dem Start des Honprozesses und dem Beginn des substantiellen Materialabtrages zur Erfassung des Bohrungs-Messsignals genutzt werden. Daher wird bei einer Weiterbildung das Bohrungs-Messsignal zur Beschreibung der feingebohrten Bohrung erfasst, während der Honprozess bereits gestartet wurde. Es ist auch möglich, dass das Bohrungs-Messsignal zur Beschreibung der feingebohrten Bohrung vollständig vor Beginn des Honprozesses erfasst wird, also während der Honprozess noch nicht gestartet wurde. Bei manchen Ausführungsformen beginnt die Erfassung des Bohrungs-Messsignales vor dem Start des Honprozesses und erstreckt sich noch in die Anfangsphase des Honprozesses hinein, beispielsweise in diejenige Zeit, in der die Bearbeitungselemente des Honwerkzeuges mit relativ großer Zustellgeschwindigkeit in Richtung der zu bearbeitenden Oberfläche zugestellt werden, bevor der eigentliche Bearbeitungseingriff beginnt. Wenn zumindest ein Teil der für die Erfassung des Bohrungs-Messsignals erforderlichen Messzeit in die Phase nach dem Start des Honprozesses fällt, ergibt sich ein erheblicher Zeitgewinn und Bearbeitungszeiten können verkürzt werden.

Bei der der Honeinrichtung zugeordneten Messeinrichtung können unterschiedliche Messprinzipien alternativ oder in Kombination genutzt werden. Bei manchen Ausführungsformen ist die Messeinrichtung ein pneumatisches Messsystem (auch als "Luftmesssystem" bezeichnet). Messeinrichtungen mit taktilen Messsensoren (Taststiften o.dgl.), kapazitive, induktive und/oder optische Messprinzipien sind ebenfalls möglich.

Bei manchen Verfahrensvarianten wird das Werkstück nach Abschluss der Feinbohroperation von der Feinbohreinrichtung direkt in die Bearbeitungsposition an der Honeinrichtung transferiert. Insbesondere kann es so sein, dass in Materialflussrichtung zwischen der Feinbearbeitungseinrichtung und der Honeinrichtung keine Messeinrichtung zur quantitativen dimensionellen Vermessung die feingebohrten Bohrung vorgesehen ist.

Gegebenenfalls kann auf dem Transferweg eine "Gebohrt-Kontrolle" vorgesehen sein, die im Sinne einer Ja/Nein-Entscheidung feststellt, ob eine reguläre Feinbohroperation stattgefunden hat, damit zu Beginn der nachfolgenden Honoperation das Honwerkzeug ohne Kollision mit dem Werkstück in die Bohrung einfahren kann. Diese Kontrolleinrichtung kann einfach und kostengünstig aufgebaut sein, da keine genaue dimensionelle Messung der Bohrung gefordert ist.

Bei manchen Ausführungsformen umfasst die Honeinrichtung eine Nachmesseinrichtung zur Messung der gehonten Bohrung nach Abschluss der (ein- oder mehrstufigen) Honoperation. Die Nachmesseinrichtung erzeugt eines oder mehrere Nachmess-Signale, aus denen Informationen über den Durchmesser, die Makroform und/oder über die Oberflächenbeschaffenheit der gehonten Bohrung ableitbar sind. Diese Informationen können zur Qualifizierung des fertig bearbeiteten Werkstückes genutzt werden.

Die Nachmesseinrichtung kann als stationäre Messeinrichtung mit höherer Messgenauigkeit ausgelegt sein als die hochdynamischen Messeinrichtungen für die In-Prozess-Messung während der Honbearbeitung.

Bei einer Weiterbildung ist die Nachmesseinrichtung signalübertragend mit einer zur Steuerung der Honoperationen vorgesehenen Honsteuerung verbunden und die Honsteuerung ist zur Steuerung des Betriebs der Honeinrichtung in Abhängigkeit von Messsignalen der Nachmesseinrichtung konfiguriert. Da die Nachmesseinrichtung eine vom Bearbeitungsprozess losgelöste stationäre Messung mit hoher Genauigkeit gestattet, kann die Rückführung der Nachmess-Signale zur Honsteuerung zur weiteren Steigerung der Bearbeitungsgenauigkeit genutzt werden, um beispielsweise die Durchmesserstreuung der bearbeiteten Werkstücke zu verringern. Dadurch ist eine größere Stabilität des Bearbeitungsverfahrens bei geringeren Ausschussquoten und engeren Toleranzen erzielbar. Diese zusätzliche Nachmessung und Signalrückführung hat sich als sehr vorteilhaft erwiesen, auch wenn bereits über die an den Honwerkzeugen vorgesehenen Messsensoren eine in-situ Messung der gehonten Bohrung während der Honoperation stattfinden kann.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ausführungsbeispiele der Erfindung sind in den Zeichnungen dargestellt und werden im folgenden näher erläutert.
- Fig. 1: zeigt eine schematische Ansicht einer Ausführungsform einer Bearbeitungsanlage zur kombinierten Feinbohr- und Honbearbeitung zylindrischer Innenflächen von Bohrungen in Werkstücken und
- Fig. 2: zeigt einen Axialschnitt durch eine im Wesentlichen zylindrischen Bohrung, die nach Abschluss der Feinbohroperation einen Zylindrizitätsfehler mit endseitigen Durchmessererweiterungen besitzt und in drei axial beanstandeten Messebenen vermessen wird.

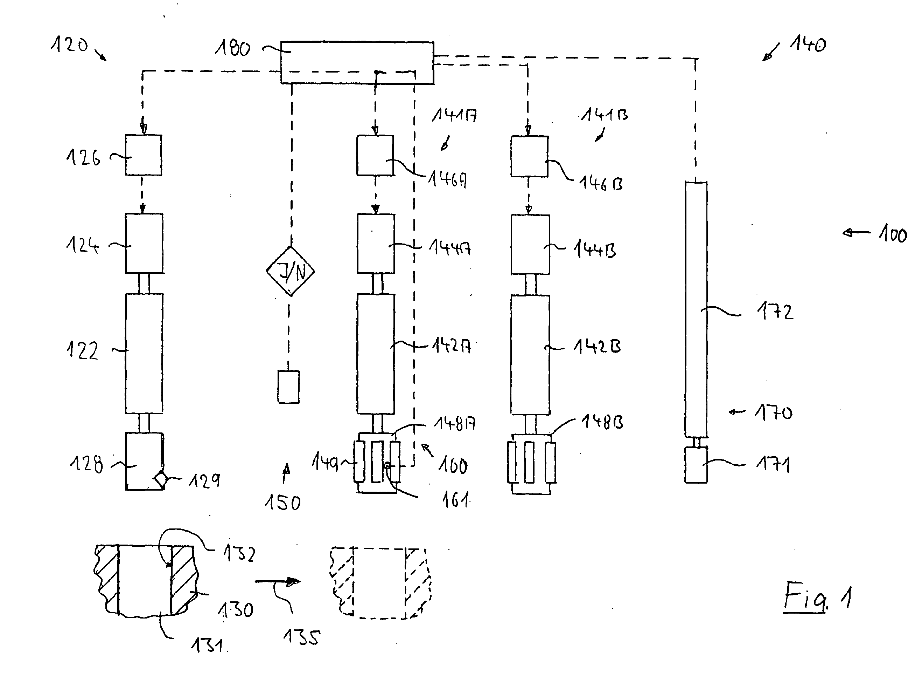

In Fig. 1 ist eine schematische Darstellung einer Ausführungsform einer Bearbeitungsanlage 100 zum Feinbearbeiten zylindrischer Innenflächen von Bohrungen in Werkstücken durch Feinbohren und nachfolgendes Honen gezeigt. Die Bearbeitungsanlage umfasst eine Feinbohreinrichtung 120 sowie eine Honeinrichtung 140, die im Beispielsfall auf einem gemeinsamen Maschinenbett (nicht gezeigt) aufgebaut sind, bei anderen Ausführungsformen jedoch auch getrennt voneinander aufgestellte Maschinenbetten haben können.

Die Feinbohreinrichtung 120 umfasst eine Feinbohrspindel 122, deren starr geführte Spindelachse im Wesentlichen vertikal ausgerichtet ist und die mit Hilfe eines Spindelantriebs 124 vertikal bewegt und um die Spindelachse gedreht werden kann. An das freie untere Ende der Feinbohrspindel ist ein Feinbohrwerkzeug 128 starr angekoppelt, an dessen Umfang eine aus Hartmetall bestehende Schneidplatte angebracht ist, die als Bohrerspitze 129 dient. Mit Hilfe einer nicht gezeigten Verstelleinrichtung kann die radiale Position der Bohrerspitze verstellt und damit der Durchmesser der feinzubohrenden Bohrung festgelegt werden. Die Axialbewegung und die Rotationsbewegung der Feinbohrspindel sowie die Zustellung der Bohrerspitze werden über eine Feinbohr-Steuereinheit 126 gesteuert. Bei typischen Feinbohroperation wird mit Drehzahlen zwischen ca. 1000 und ca. 3000 U/min und Vorschubgeschwindigkeiten zwischen ca. 200 und ca. 1000 m/min gearbeitet. Typische Schnitttiefen (Materialabtrag) bezogen auf den Durchmesser liegen normalerweise zwischen 0,1 mm und 1 mm. Abweichungen von diesen typischen Parameterbereichen sind in Ausnahmefällen möglich.

Die zweispindlige Honeinrichtung 140 umfasst zwei im Wesentlichen identisch aufgebaute Honeinheiten 141A und 141 B. Jeder der Honeinheiten hat eine vertikale Honspindel 142A bzw. 142B, die über einen Spindelantrieb 144A bzw. 144B so angetrieben wird, dass die Honspindel bei der Honbearbeitung vertikal oszillierende Arbeitsbewegungen ausführt, denen eine Rotationsbewegung um die vertikale Drehachse überlagert ist. Eine erste Honsteuereinheit 146A bzw. eine zweite Honsteuereinheit 146B steuern die Arbeitsbewegungen der Honspindeln. Am unteren freien Ende der ersten Honspindel 142A ist ein erstes Honwerkzeug 148A begrenzt beweglich angekoppelt, mit dem unmittelbar im Anschluss an die Feinbohroperation eine Vorhonoperation an der feingebohrten Bohrung durchführbar ist. Das zweite Honwerkzeug 148B ist für eine Fertighonoperation ausgelegt, mit der die angestrebte Makroform und Oberflächenstruktur der feinbearbeiteten Bohrung erzielt wird. Da der Aufbau solcher Honeinheiten insoweit grundsätzlich bekannt ist, wird er hier nicht näher erläutert.

Die Honeinrichtung 140 hat mehrere Kontroll- und Messsysteme zur Kontrolle bzw. zur Vermessung des bearbeiteten Werkstückes vor, während und nach der Honbearbeitung. Zwischen der Feinbohreinrichtung 120 und der ersten Honeinheit 141A ist eine Bohrungskontrolleinrichtung 150 angeordnet, die dafür ausgelegt ist, festzustellen, ob das von der Feinbohreinrichtung kommende Werkstück von der Feinbohreinrichtung tatsächlich in die erwartete Makroform gebracht wurde, die eine anschließende Honbearbeitung durch die Honeinheiten 141A und 141B erlaubt. Mit Hilfe der Bohrungskontrolleinrichtung 150 kann insbesondere eine "Gebohrt-Kontrolle" durchgeführt werden, um beispielsweise festzustellen, ob die Bohrspitze 129 der Feinbohreinrichtung noch weitgehend intakt oder über die Toleranzgrenzen hinaus verschlissen bzw. gebrochen ist. Im Falle eines Bohrspitzenbruches würde der festgestellte Durchmesser der von der Feinbohreinrichtung kommenden Bohrung deutlich geringer sein als der nach einem korrekten Feinbohrvorgang vorliegende Bohrungsdurchmesser, wodurch die nachfolgenden Honoperationen erschwert bzw. im ungünstigsten Fall unmöglich gemacht würden. Zudem kann es bei zu kleinen Bohrungen am Beginn der Honbearbeitung zu Kollisionen des ersten Honwerkzeuges 148A mit dem Werkstück kommen, die vermieden werden sollen. Da für die Gebohrt-Kontrolle lediglich eine qualitative oder grob quantitative Prüfung mit einer Genauigkeit in der Größenordnung von ca. 50 µm oder darüber ausreicht, kann die Bohrungskontrolleinrichtung relativ einfach aufgebaut sein. Geeignete Bohrungskontrolleinrichtungen sind an vielen herkömmlichen Honanlagen vorhanden und können für diesen Zweck verwendet werden.

Weiterhin hat die Honeinrichtung eine in die erste Honeinheit 141A integrierte Messeinrichtung 160, die sowohl der Eingangskontrolle der von der Feinbohreinrichtung kommenden, feingebohrten Bohrung als auch der Überwachung des Bearbeitungsfortschritts im Verlauf der ersten Honoperation dient. Die Messeinrichtung 160 ist als pneumatisch arbeitende "Luftmesseinrichtung" ausgelegt. Sie umfasst ein Paar von Messdüsen 161, die am Honwerkzeug 148A diametral gegenüberliegend zwischen den Honleisten 149 angeordnet sind. Den Messdüsen wird, beispielsweise über einen Ringverteiler, ein Luftstrom zugeleitet. Der in dem System herrschende Luftdruck wird innerhalb der Messeinrichtung analysiert und ermöglicht es, den Abstand zwischen den Luftmessdüsen 161 und der Bohrungswand zu messen. Der Messbereich typischer geeigneter Luftmesssysteme reicht in der Regel bis ca. 150 µm (in Sonderfällen bis ca. 300 µm), wobei mit dem dynamischen System Messgenauigkeiten in der Größenordnung zwischen ca. 2 µm und 5 µm erzielbar sind.

Die zweite Honeinheit kann ebenfalls eine entsprechend aufgebaute oder nach einem anderen Messprinzip funktionierende Messeinrichtung mit in das Honwerkzeug 148B integrierten Messsensoren haben, es ist jedoch für die vorliegende Erfindung auch eine Ausgestaltung ohne integrierte Messeinrichtung möglich.

In Materialflussrichtung hinter den Honeinheiten ist eine Nachmesseinrichtung 170 angebracht, zu der ein Nachmesskopf 171 gehört, der mit Hilfe einer Messspindel 172 in die fertig gehonte Bohrung eingefahren, gegebenenfalls innerhalb dieser Bohrung bewegt und wieder aus der Bohrung herausgezogen werden kann. Die Nachmesseinrichtung 170 ist signalleitend mit der übergeordneten Steuerung 180 der Honeinrichtung verbunden, so dass die im Nachmesssignal der Nachmesseinrichtung enthaltene Information über Durchmesser, Makroform und Oberflächenbeschaffenheit der Bohrung über die Honsteuerung 180 verarbeitet und zur Steuerung der Honbearbeitung mit Hilfe der Honspindeln genutzt werden kann.

Die Feinbohr-Steuereinheit 126 ist signalleitend mit der Steuerung 180 der Honeinrichtung verbunden. Dadurch ist es insbesondere möglich, die von der Messeinrichtung 160 der Honeinrichtung stammenden Signale zur Steuerung des Betriebs der Feinbohreinrichtung zu verarbeiten. Die Funktionen der Feinbohr-Steuereinheit 126 und der Steuerung 180 der Honeinrichtung können innerhalb einer Gesamt-Steuereinrichtung der Bearbeitungsanlage integriert sei, z.B. in einem Steuer-Rechner. Bei Zwischenschaltung einer geeigneten Schnittstelle ist auch eine getrennte Konfiguration möglich, so dass ggf. eine im Wesentlichen autark aufgebaute Feinbohreinrichtung mit einer im Wesentlichen autark aufgebauten Honeinrichtung zum Aufbau einer erfindungsgemäßen Bearbeitungsanlage verwendet werden können, wenn die Möglichkeit besteht, das Bohrungs-Messsignal der Honeinrichtung auf die Feinbohreinrichtung zurückzuführen.

Die Bearbeitungsanlage 100 kann wie nachfolgend beschrieben arbeiten. Der Betrieb der Bearbeitungsanlage wird beispielhaft anhand der Bearbeitung eines Motorblocks 130 für eine Brennkraftmaschine beschrieben, der mehrere Zylinderbohrungen 131 enthält, deren Innenflächen 132 durch Feinbohren und nachfolgendes Honen bearbeitet werden sollen, um nach Abschluss der Honbearbeitung als Gleitpartner für Kolbenringe des Motors zu dienen. Das Werkstück 130 ist auf einer nicht gezeigten Aufspannplatte aufgespannt und wird mit Hilfe geeigneter Fördereinrichtungen in Materialflussrichtung 135 zu den einzelnen Bearbeitungsstationen der Bearbeitungsanlage und von diesen wegbewegt.

Zunächst wird das Werkstück 130 für die Feinbohr-Bearbeitung in eine Bearbeitungsposition gebracht, die es erlaubt, das Feinbohrwerkzeug 128 durch vertikale Abwärtsbewegung der Feinbohrspindel in die Bohrung 131 einzuführen. Dann wird die Bohrung 131 mit Hilfe des Feinbohrwerkzeugs 128 feingebohrt, um eine feingebohrte Bohrung zu erzeugen, die gegenüber der angestrebten Sollform nach Ende der Honbearbeitung ein geringes Untermaß von beispielsweise 80 µm im Durchmesser hat. Zur Erzielung des gewünschten Durchmesser wird die radiale Position der Bohrerspitze mit Hilfe der Feinbohrsteuerung 126 bis auf den gewünschten Endwert zugestellt. Nach Ende der Feinbohroperation wird die Bohrerspitze zurückgezogen und das Feinbohrwerkzeug nach oben aus der feingebohrten Bohrung abgezogen.

Das Werkstück 130 wird danach in den Bereich der BohrungsKontrolleinrichtung 150 verfahren. Diese überprüft mittels eines Kontrollsensors, ob der Durchmesser der feingebohrten Bohrung oberhalb eines vorgegebenen Grenzwertes liegt, so dass eine Einführung der Honwerkzeuge in den nachfolgenden Honstufen gefahrlos möglich ist. Sollte es beim Feinbohrvorgang zum Bruch der Bohrspitze gekommen sein oder das Feinbohrwerkzeug durch Verschleiß nicht mehr in der Lage sein, einen ausreichenden Innendurchmesser zu erzeugen, so wird das nicht ausreichend aufgebohrte Werkstück aus dem Materialfluss abgezogen. Im Beispielsfall wird als Kontrolleinrichtung eine Scheibe verwendet, die einen Außendurchmesser besitzt, welcher in den kleinsten, für die Absicherung des Honprozesses noch möglichen Bohrungsdurchmesser gerade noch eingefahren werden kann. Ein binäre Sensor erfasst mit Hilfe einer Endlagenkontrolle, ob die Kontrolleinrichtung in die Bohrung vollständig eingefahren ist. Ist die Bohrung zu eng, so kann die Scheibe nicht eingeführt werden, so dass vom Endlagensensor kein Freigabesignal (Gutsignal) abgegeben wird.

Werkstücke mit ausreichendem Innenmaß der feingebohrten Bohrung werden derart in die gestrichelt gezeichnete Bearbeitungsposition unterhalb der ersten Honeinheit 141A verfahren, dass das Honwerkzeug 148A durch Absenken der Honspindel in die feingebohrte Bohrung eingefahren werden kann.

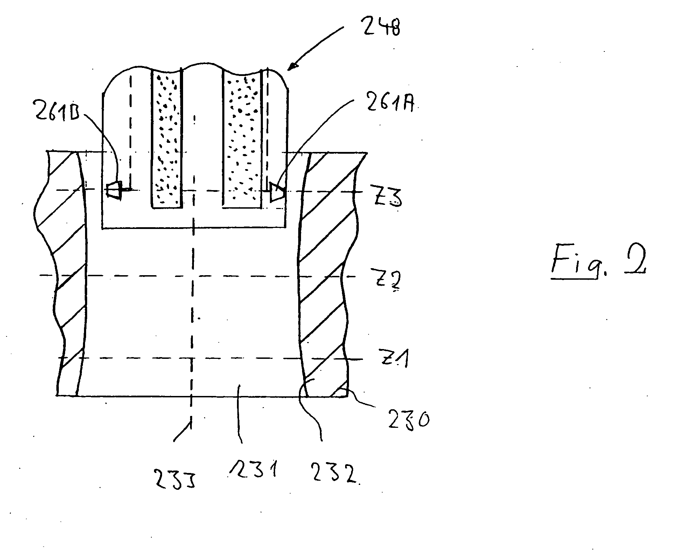

Danach wird das erste Honwerkzeug 148A durch Absenken der ersten Honspindel 142A in die feingebohrte Bohrung eingeführt. Mit Hilfe der Messeinrichtung 160 wird dann eine quantitative dimensionelle Vermessung der feingebohrten Bohrung durchgeführt, wobei das Messergebnis in Form von Bohrungs-Messsignalen an die Steuerung 180 der Honeinrichtung geleitet wird. Diese ist so konfiguriert, dass das Bohrungs-Messsignal bzw. ein daraus abgeleitetes Signal an die Feinbohr-Steuereinheit 126 weitergeleitet werden kann, so dass die Feinbohreinrichtung 120 über die Feinbohr-Steuereinheit in Abhängigkeit von dem Bohrungs-Messsignal gesteuert werden kann. Ein Beispiel für eine hochgenaue dimensionelle Vermessung einer feingebohrten Bohrung wird anhand von Fig. 2 näher erläutert.

In vielen Fällen liegen zwischen dem programmgesteuerten Start der Honoperation und dem Beginn eines substantiellen Materialabtrags durch das Honen einige Zehntelsekunden bis Sekunden, die dazu benötigt werden, die am Honwerkzeug vorhandenen, zustellbaren Bearbeitungselemente von ihrer zurückgezogenen Position radial nach außen in Bearbeitungseingriff mit der zu bearbeitenden Bohrungsinnenwand zu bringen. Innerhalb dieses Zeitfensters ist das Honwerkzeug zwar schon teilweise oder ganz in die Bohrung eingefahren, der Materialabtrag hat aber noch nicht begonnen, so dass die feingebohrte Bohrung noch nicht oder nicht wesentlich verändert ist. Bei vorteilhaften Varianten wird auch diese Zeit zur Erfassung von Bohrungs-Messsignalen genutzt, so dass beispielsweise die Messung mindestens zeitweise zeitgleich mit der Zustellung der Bearbeitungswerkzeuge am Honwerkzeug stattfindet. Gegebenenfalls kann sich die Messung ohne Unterbrechung bis in die Anfangsphase der materialabtragenden Bearbeitung erstrecken, so dass gegebenenfalls ein nahtloser Übergang zwischen der Erfassung des Bohrungs-Messsignals zur Ausgangskontrolle der Feinbohroperation und einer In-Prozess-Messung der nachfolgenden Honbearbeitung stattfindet.

In allen Fällen dient die Messeinrichtung 160 der Honeinrichtung unmittelbar nach Abschluss der Feinbohroperation und noch vor Beginn der materialabtragenden Honoperation als Ausgangskontrolle zur Überprüfung des Bearbeitungsergebnisses der Feinbohroperation und gleichzeitig als Eingangskontrolle für die nachfolgende Honoperation. Ergibt das Bohrungs-Messsignal, dass die durch das Feinbohren erzielte Makroform der feingebohrten Bohrung nicht innerhalb eines vorgegebenen Toleranzbereiches liegt, so kann der Betrieb der Feinbohreinrichtung beispielsweise durch Verstellen der radialen Anschlagsposition der Bohrerspitze 129 so gesteuert werden, dass bei der nachfolgenden Bearbeitung eines nächsten Werkstückes die resultierende Makroform der feingebohrten Bohrung nach Abschluss der Feinbohroperation im gewünschten Toleranzbereich liegt.

Nach dieser Ausgangskontrolle des Feinbohrens und Eingangskontrolle für die Honoperationen beginnt die mit Hilfe der ersten Honeinheit 141A durchgeführte Vorhonoperation, mit der die Innenfläche 132 der Bohrung 131 eine gegenüber dem Feinbohren geänderte Oberflächenstruktur (mit überkreuzten Bearbeitungsspuren) sowie eine näher bei der Sollform liegende Makroform mit geringfügig größerem Innendurchmesser erhält. Das Bearbeitungsergebnis der Vorhonoperation kann während des Vorhonens und/oder nach Abschluss des Vorhonens mit Hilfe der Messeinrichtung 160 überprüft werden. Insbesondere kann auf Basis des entsprechenden Messsignals die Vorhonoperation beendet werden, wenn die nach dem Vorhonen angestrebte Makroform bzw. der nach dem Vorhonen angestrebte Durchmesser der Bohrung erreicht ist.

Anschließend wird das erste Honwerkzeug 148A aus der Bohrung ausgefahren und das Werkstück wird in eine der zweiten Honeinheit 141B zugeordnete Bearbeitungsposition bewegt, die eine Einführung des zweiten Honwerkzeuges 148B in die Bohrung erlaubt. Nach Absenken des zweiten Honwerkzeuges 148B in die Bohrung wird die materialabtragende Fertighonoperation durchgeführt, durch die die Bohrung die gewünschte Sollform und Oberflächenstruktur erhält. Auch die Fertighonoperation kann mit Hilfe einer Messeinrichtung überwacht und gegebenenfalls in Abhängigkeit eines entsprechenden Messsignals gesteuert werden.

Nach Abschluss der Fertighonoperation und Zurückziehen der zweiten Honspindel aus dem Werkstück wird das Werkstück in Richtung der Nachmesseinrichtung 170 verfahren, die dazu eingerichtet ist, die fertige feinbearbeitete Bohrung 131 zu vermessen und zu überprüfen, ob der Durchmesser, die Makroform der Bohrung 131 und/oder die Oberflächenstruktur der Innenfläche 132 den Spezifikationen des Bearbeitungsprozesses genügen. Durch eine Rückführung entsprechender Nachmess-Signale zur Steuerung 180 der Honmaschine ist eine Verbesserung der Konstanz des Bearbeitungsverfahrens erzielbar, so dass Streuungen in der Qualität bearbeiteter Bohrung im Vergleich zu herkömmlichen Bearbeitungsanlagen verringert werden können.

Ein Beispiel für eine hochgenaue dimensionelle Vermessung einer feingebohrten Bohrung 231 in einem Werkstück 230 wird anhand von Fig. 2 näher erläutert. Die idealerweise kreiszylindrische Innenfläche 232 hat durch den Feinbohrprozess eine von einer Kreiszylinderform signifikant abweichende Form mit einer Taille im axialen Mittelbereich der Bohrung sowie mit Durchmessererweiterungen zu den jeweiligen offenen Endbereichen der Bohrung erhalten. Nachdem das Werkstück in den Bereich der ersten Honeinheit verfahren wurde, wird das Honwerkzeug 248 so weit in die Bohrung 231 abgesenkt, bis die diametral gegenüberliegenden Luftmessdüsen 261A, 261 B der Messeinrichtung eine Messebene Z3 in der Nähe des spindelzugewandten, oberen Eingangsbereichs der Bohrung 231 erreicht haben. Nachdem die vertikale Vorschubbewegung gestoppt wurde, wird das Honwerkzeug 248 in der Bohrung im Wesentlichen symmetrisch um die Bohrungsachse 233 herum um mindestens 180° gedreht, um den Durchmesser der Bohrung auf Ebene Z3 zu bestimmen. Mit Hilfe eines Drehwertgebers für die Honspindel ist es möglich, die den Durchmesserwerten zugeordneten Drehwinkelwerte des Honwerkzeuges zu erfassen, so dass auch eine winkelauflösende Messung des Durchmessers im Bereich der jeweiligen Messebene möglich ist. Hieraus sind Informationen über die Bohrungsform in der Messebene ableitbar. Nach Abschluss der Messung wird das Honwerkzeug weiter abgesenkt, so dass die Messsensoren 261A, 261 B im axialen Zentralbereich der Bohrung bei der Messebene Z2 liegen. Anschließend wird der entsprechende, gegebenenfalls winkelauflösende Durchmesser-Messvorgang wiederholt. Eine dritte Messung findet danach auf Ebene Z1 in der Nähe des spindelabgewandten Endes der Bohrung statt. Die Messergebnisse werden zur Bestimmung der Makroform der Bohrung ausgewertet. Ergibt diese Auswertung, dass die Makroform außerhalb der für die in Feinbohrvorgang vorgegebene Spezifikation liegt, so wird das Feinbohrwerkzeug durch Verlagerung der Bohrerspitze neu eingestellt oder ausgewechselt, um am nachfolgenden Werkstück eine Makroform der feingebohrten Bohrung innerhalb der Spezifikation zu erhalten.

Mit der Bearbeitungsanlage und dem beschriebenen Verfahren ist es möglich, einen sehr stabilen Bearbeitungsprozess zu fahren, bei dem die bearbeiteten Werkstücke nur sehr geringen Qualitätsschwankungen unterworfen sind. Eventuelle, vor allem durch Verschleiß der Bearbeitungswerkzeuge entstehende Abweichungen vom idealen Bearbeitungsprozess können zeitnah erkannt und mit Hilfe der Rückführung entsprechender Messsignale an die einzelnen Bearbeitungseinheiten durch Verstellung der Bearbeitungswerkzeuge und/oder Auswechslung von Bearbeitungswerkzeugen kurzfristig kompensiert werden.

Die Erfindung wurde anhand eines Ausführungsbeispiels erläutert, bei dem die Honeinrichtung nach dem Feinbohren eine konventionelle Honbearbeitung mit axial oszillierender und rotatorischer Bewegung des Honwerkzeuges ausführt. Bei anderen Ausführungsformen sind an der Honeinrichtung weitere Einrichtungen zur Erzeugung definierter Oberflächeneigenschaften vorgesehen. Beispielsweise kann eine Lasereinheit integriert sein, um eine Oberflächenstrukturierung mittels Laserstrahlung durchzuführen. Laserbestrahlung kann auch genutzt werden, um oberflächennahe Bereiche der bearbeiteten Werkstückoberfläche durch Energieeintrag großflächig umzuwandeln, beispielsweise zu härten. Es kann auch eine Bürsteinrichtung zum Bürsten der Oberflächen integriert sein. Bei anderen Ausführungsformen kann bei der Erzeugung definierter Oberflächenstrukturen und anderer definierter Oberflächeneigenschaften völlig auf das klassische Honen verzichtet werden, indem beispielsweise eines oder mehrere der genannten Verfahren zur abschliessenden Oberflächen-Feinstbearbeitung in der Honeinrichtung genutzt werden. Die Begriffe "Honeinrichtung" und "Honwerkzeug" stehen somit stellvertretend für Endbearbeitungsverfahren bzw. Endbearbeitungswerkzeuge, die nach einer Feinbohroperation eingesetzt werden können, um die feingebohrte Bohrung spanabhebend oder ohne Spanabtrag zu bearbeiten und in einen angestrebten Endzustand zu bringen.

## Patentansprüche

1. Verfahren zur Feinbearbeitung von Innenflächen von Bohrungen in Werkstücken (130) durch Feinbohren und nachfolgendes Honen mit folgenden Schritten:
Feinbohren mindestens einer Bohrung eines Werkstückes mittels eines Feinbohrwerkzeuges (128) einer Feinbohreinrichtung (120) zur Erzeugung einer feingebohrten Bohrung;
Transfer des Werkstückes in eine Bearbeitungsposition einer Honeinrichtung (140) zur Bearbeitung der feingebohrten Bohrung mittels eines Honwerkzeuges (148A, 148B) der Honeinrichtung, **gekennzeichnet durch**:
Messen der feingebohrten Bohrung mittels einer der Honeinrichtung zugeordneten Messeinrichtung (160) in der Bearbeitungsposition zur Erzeugung mindestens eines die Eigenschaften der feingebohrten Bohrung repräsentierenden Bohrungs-Messsignals; und
Steuerung des Betriebs der Feinbohreinrichtung (120) in Abhängigkeit von dem Bohrungs-Messsignal.

2. Verfahren nach Anspruch 1, worin der Transfer des Werkstückes von der Feinbohreinrichtung (120) in die Bearbeitungsposition an der Honeinrichtung (140) ohne Zwischenstop durchgeführt wird oder worin nach dem Feinbohren und vor dem Messen der feingebohrten Bohrung eine Gebohrt-Kontrolle an der feingebohrten Bohrung durchgeführt wird.

3. Verfahren nach einem der Ansprüche 1 oder 2, worin das Messen der feingebohrten Bohrung mindestens teilweise oder vollständig vor einem Beginn der nachfolgenden Honbearbeitung durchgeführt wird.

4. Verfahren nach einem der vorhergehenden Ansprüche, worin das Messen der feingebohrten Bohrung mindestens teilweise nach Beginn einer Honoperation in einer Anfangsphase der Honoperation vor dem Beginn einer substantiellen materialabtragenden Bearbeitung durch die Honoperation durchgeführt wird.

5. Verfahren nach einem der vorhergehenden Ansprüche, worin das Messen der feingebohrten Bohrung mit einer Messgenauigkeit von weniger als 10 µm durchgeführt wird und/oder worin zur Messung der feingebohrten Bohrung eine pneumatische Messeinrichtung und/oder eine Messeinrichtung mit mindestens einem taktilen, kapazitiven, induktiven und/oder optischen Messsensor verwendet wird.

6. Verfahren nach einem der vorhergehenden Ansprüche, worin die feingebohrte Bohrung mit Hilfe mindestens eines an einem Honwerkzeug (248) angebrachten Messsensor (261A, 261 B) gemessen wird, wobei vorzugsweise der an dem Honwerkzeug angebrachte Messsensor nach Abschluss der Messung der feingebohrten Bohrung dazu genutzt wird, während einer nachfolgenden Honoperation den Fortschritt der Honoperation zu überwachen.

7. Verfahren nach einem der vorhergehenden Ansprüche, worin die gehonte Bohrung nach Abschluss der Honoperation zur Erzeugung mindestens eines Nachmess-Signals gemessen wird und eine Steuerung des Betriebs der Honeinrichtung in Abhängigkeit von dem Nachmess-Signal erfolgt.

8. Bearbeitungsanlage (100) zum Feinbearbeiten zylindrischer Innenflächen von Bohrungen in Werkstücken (130) durch Feinbohren und nachfolgendes Honen mit:
einer Feinbohreinrichtung (120) mit mindestens einer zum Tragen eines Feinbohrwerkzeuges (128) eingerichteten Feinbohrspindel (122) sowie einer Feinbohrsteuerung (126) zur Steuerung des Betriebs der Feinbohreinrichtung;
einer Honeinrichtung (140) mit mindestens einer zum Tragen eines Honwerkzeugs (148A, 148B) eingerichteten Honspindel (142A, 142B) sowie einer Honsteuerung (180) zur Steuerung des Betriebs der Honeinrichtung, **dadurch gekennzeichnet, dass**
die Honeinrichtung mindestens eine Messeinrichtung (160) zur Messung einer durch die Feinbohreinrichtung (120) bearbeiteten feingebohrten Bohrung und zur Erzeugung eines die Eigenschaften der feingebohrten Bohrung repräsentierenden Bohrungs-Messsignals aufweist und die Feinbohrsteuerung (126) zur Steuerung des Betriebs der Feinbohreinrichtung in Abhängigkeit von dem Bohrungs-Messsignal konfiguriert ist.

9. Bearbeitungsanlage nach Anspruch 8, worin die Messeinrichtung (160) zur Messung der feingebohrten Bohrung derart eingerichtet ist, dass die Messung in der für die nachfolgende Honbearbeitung vorgesehene Bearbeitungsposition des Werkstückes durchführbar ist.

10. Bearbeitungsanlage nach Anspruch 8 oder 9, worin in Materialflussrichtung (135) zwischen der Feinbohreinrichtung (120) und der Honeinrichtung (140) keine Messeinrichtung zur quantitativen dimensionellen Messung der feingebohrten Bohrung vorgesehen ist.

11. Bearbeitungsanlage nach einem der Ansprüche 8 bis 10, worin die Messeinrichtung (160) mindestens einen an einem Honwerkzeug (148A, 248) angebrachten Messsensor (161, 261A, 261 B) umfasst.

12. Bearbeitungsanlage nach einem der Ansprüche 8 bis 11, worin die Messeinrichtung (160) derart eingerichtet ist, dass die feingebohrte Bohrung mit einer Messgenauigkeit von weniger als 10 µm vermessbar ist.

13. Bearbeitungsanlage nach einem der Ansprüche 8 bis 12, worin die Messeinrichtung als pneumatische, kapazitive, induktive und/oder optische Messeinrichtung ausgelegt ist.

14. Bearbeitungsanlage nach einem der Ansprüche 8 bis 13, worin zwischen der Feinbohreinrichtung (120) und einer ersten Honeinheit (141A) der Honeinrichtung (140) eine Bohrungskontrolleinrichtung (150) zur qualitativen oder grob quantitativen Prüfung der feingebohrten Bohrung auf Fehler der Feinbohroperation angeordnet ist.

15. Bearbeitungsanlage nach einem der Ansprüche 8 bis 14, worin eine Nachmesseinrichtung (170) zur Messung der gehonten Bohrung nach Abschluss der Honoperation und zur Erzeugung mindestens eines Nachmess-Signals vorgesehen ist, wobei vorzugsweise die Nachmesseinrichtung (170) signalübertragend mit einer zur Steuerung der Honoperationen vorgesehenen Honsteuerung (180) verbunden ist und die Honsteuerung zur Steuerung des Betriebs der Honeinrichtung in Abhängigkeit von Nachmess-Signalen der Nachmesseinrichtung konfiguriert ist.

## Claims

1. Method for the fine machining of internal surfaces of boreholes in workpieces (130) by fine boring and subsequent honing with the following steps:
fine boring of at least one borehole of a workpiece by means of a fine boring tool (128) of a fine boring device (120) for producing a finely bored borehole;
transfer of the workpiece into a machining position of a honing device (140) for machining the finely bored borehole by means of a honing tool (148A, 148B) of the honing device,
**characterized by**:
measuring the finely bored borehole by means of a measuring device (160) associated with the honing device in the machining position for generating at least one borehole measurement signal representing the characteristics of the finely bored borehole; and
controlling the operation of the fine boring device (120) as a function of the borehole measurement signal.

2. Method according to claim 1, wherein the transfer of the workpiece from the fine boring device (120) into the machining position on the honing device (140) is carried out without an intermediate stop, or wherein following fine boring and prior to the measurement of the finely bored borehole a bored check is carried out on the finely bored borehole.

3. Method according to any one of the claims 1 or 2, wherein the measurement of the finely bored borehole takes place at least partly or completely prior to the start of subsequent honing treatment.

4. Method according to any one of the preceding claims, wherein the measurement of the finely bored borehole takes place at least partly following the start of a honing operation in an initial phase of said honing operation prior to the start of a substantial, material-removing machining by the honing operation.

5. Method according to any one of the preceding claims, wherein the measurement of the finely bored borehole takes place with a measuring accuracy of less than 10 µm and/or wherein for measuring the finely bored borehole use is made of a pneumatic measuring device and/or a measuring device with at least one tactile, capacitive, inductive and/or optical measuring sensor.

6. Method according to any one of the preceding claims, wherein the finely bored borehole is measured with the aid of at least one measuring sensor (261A, 261 B) fitted to a honing tool (248), wherein preferably the measuring sensor fitted to the honing tool, after completion of the measurement of the finely bored borehole, is used to monitor the advance of the honing operation during a subsequent honing operation.

7. Method according to any one of the preceding claims, wherein the honed borehole after completion of the honing operation is measured for generating at least one measurement check signal and a control of the operation of the honing device takes place as a function of the measurement check signal.

8. Machining equipment (100) for the fine machining of cylindrical internal surfaces of boreholes in workpieces (130) by fine boring and subsequent honing with:
a fine boring device (120) with at least one fine boring spindle (122) set up for carrying a fine boring tool (128), as well as a fine boring control unit (126) for controlling the operation of the fine boring device;
a honing device (140) with at least one honing spindle (142A, 142B) set up for carrying a honing tool (148A, 148B), as well as a honing control unit (180) for controlling the operation of the honing device,
**characterized in that**
the honing device has at least one measuring device (160) for measuring a finely bored borehole machined by the fine boring device (120) and for generating a borehole measurement signal representing the characteristics of the finely bored borehole and the fine boring control unit (126) is configured for controlling the operation of the fine boring device as a function of the borehole measurement signal.

9. Machining equipment according to claim 8, wherein the measuring device (160) for measuring the finely bored borehole is set up in such a way that the measurement can be performed in the workpiece machining position intended for the subsequent honing treatment.

10. Machining equipment according to claim 8 or 9, wherein in the material flow direction (135) between the fine boring device (120) and the honing device (140) there is no measuring device provided for quantitative dimensional measurement of the finely bored borehole.

11. Machining equipment according to any one of the claims 8 to 10, wherein the measuring device (160) comprises at least one measuring sensor (161, 261A, 261 B) fitted to a honing tool (148A, 248).

12. Machining equipment according to any one of the claims 8 to 11, wherein the measuring device (160) is set up in such a way that the finely bored borehole can be measured with a measuring accuracy of less than 10 µm.

13. Machining equipment according to any one of the claims 8 to 12, wherein the measuring device is designed as a pneumatic, capacitive, inductive and/or optical measuring device.

14. Machining equipment according to any one of the claims 8 to 13, wherein between the fine boring device (120) and a first honing unit (141A) of honing device (140) is provided a borehole checking device (150) for the qualitative or roughly quantitative inspection of the finely bored borehole for errors or faults of the fine boring operation.

15. Machining equipment according to any one of the claims 8 to 14, wherein a measurement check device (170) is provided for measuring the honed borehole after completion of the honing operation and for generating at least one measurement check signal, wherein preferably the measurement check device (170) is connected in signal-transmitting manner to a honing control unit (180) provided for controlling the honing operations and the honing control unit is configured for controlling the operation of the honing device as a function of the measurement check signals of the measurement check device.

## Revendications

1. Procédé d'usinage de précision de surfaces intérieures d'alésages dans des pièces (130) par perçage de précision et rodage subséquent, comprenant les étapes suivantes :
perçage de précision d'au moins un alésage d'une pièce au moyen d'un outil de perçage de précision (128) d'un dispositif de perçage de précision (120) pour produire un alésage percé avec précision ;
transfert de la pièce dans une position d'usinage d'un dispositif de rodage (140) pour usiner l'alésage percé avec précision au moyen d'un outil de rodage (148A, 148B) du dispositif de rodage,
**caractérisé par** :
la mesure de l'alésage percé avec précision au moyen d'un dispositif de mesure (160) associé au dispositif de rodage dans la position d'usinage, afin de produire au moins un signal de mesure d'alésage représentant les propriétés de l'alésage percé avec précision ; et
la commande du fonctionnement du dispositif de perçage de précision (120) en fonction du signal de mesure d'alésage.

2. Procédé selon la revendication 1, dans lequel le transfert de la pièce du dispositif de perçage de précision (120) dans la position d'usinage au dispositif de rodage (140) est effectué sans arrêt intermédiaire ou dans lequel après le perçage de précision et avant la mesure de l'alésage percé avec précision, un contrôle du perçage est effectué au niveau de l'alésage percé avec précision.

3. Procédé selon l'une quelconque des revendications 1 ou 2, dans lequel la mesure de l'alésage percé avec précision est effectuée au moins en partie ou complètement avant un début de l'usinage de rodage subséquent.

4. Procédé selon l'une quelconque des revendications précédentes, dans lequel la mesure de l'alésage percé avec précision s'effectue au moins en partie après le début d'une opération de rodage dans une phase initiale de l'opération de rodage avant le début d'un usinage avec enlèvement substantiel de matière par l'opération de rodage.

5. Procédé selon l'une quelconque des revendications précédentes, dans lequel la mesure de l'alésage percé avec précision est effectuée avec une précision de mesure inférieure à 10 µm et/ou dans lequel pour la mesure de l'alésage percé avec précision, on utilise un dispositif de mesure pneumatique et/ou un dispositif de mesure avec au moins un capteur de mesure tactile, capacitif, inductif et/ou optique.

6. Procédé selon l'une quelconque des revendications précédentes, dans lequel l'alésage percé avec précision est mesuré à l'aide d'au moins un capteur de mesure (261A, 261B) monté sur un outil de rodage (248), le capteur de mesure monté sur l'outil de rodage étant de préférence utilisé à l'issue de la mesure de l'alésage percé avec précision afin de contrôler pendant une opération de rodage subséquente le progrès de l'opération de rodage.

7. Procédé selon l'une quelconque des revendications précédentes, dans lequel l'alésage rodé, à l'issue de l'opération de rodage, est mesuré pour générer au moins un signal de post-mesure et une commande du fonctionnement du dispositif de rodage en fonction du signal de post-mesure est effectuée.

8. Installation (100) d'usinage pour l'usinage de précision de surfaces intérieures cylindriques d'alésages dans des pièces (130) par perçage de précision et rodage subséquent, comprenant :
un dispositif de perçage de précision (120) avec au moins une broche de perçage de précision (122) prévue pour porter un outil de perçage de précision (128) et une commande de perçage de précision (126) pour commander le fonctionnement du dispositif de perçage de précision ;
un dispositif de rodage (140) comprenant au moins une broche de rodage (142A, 142B) prévue pour porter un outil de rodage (148A, 148B) ainsi qu'une commande de rodage (180) pour commander le fonctionnement du dispositif de rodage,
**caractérisée en ce que**
le dispositif de rodage présente au moins un dispositif de mesure (160) pour mesurer un alésage percé avec précision usiné par le dispositif de perçage de précision (120) et pour générer un signal de mesure d'alésage représentant les propriétés de l'alésage percé avec précision et la commande de perçage de précision (126) est configurée pour commander le fonctionnement du dispositif de perçage de précision en fonction du signal de mesure d'alésage.

9. Installation d'usinage selon la revendication 8, dans laquelle le dispositif de mesure (160) pour mesurer l'alésage percé avec précision est prévu de telle sorte que la mesure puisse être effectuée dans la position d'usinage de la pièce prévue pour l'usinage de rodage subséquent.

10. Installation d'usinage selon la revendication 8 ou 9, dans laquelle, dans la direction du flux de matière (135) entre le dispositif de perçage de précision (120) et le dispositif de rodage (140), aucun dispositif de mesure n'est prévu pour la mesure dimensionnelle quantitative de l'alésage percé avec précision.

11. Installation d'usinage selon l'une quelconque des revendications 8 à 10, dans laquelle le dispositif de mesure (160) comprend au moins un capteur de mesure (161, 261A, 261B) monté sur un outil de rodage (148A, 248).

12. Installation d'usinage selon l'une quelconque des revendications 8 à 11, dans lequel le dispositif de mesure (160) est prévu de telle sorte que l'alésage percé avec précision puisse être mesuré avec une précision de mesure inférieure à 10 µm.

13. Installation d'usinage selon l'une quelconque des revendications 8 à 12, dans laquelle le dispositif de mesure est conçu sous forme de dispositif de mesure pneumatique, capacitif, inductif et/ou optique.

14. Installation d'usinage selon l'une quelconque des revendications 8 à 13, dans laquelle, entre le dispositif de perçage de précision (120) et une première unité de rodage (141A) du dispositif de rodage (140), est disposé un dispositif de contrôle de perçage (150) pour le contrôle qualitatif ou grossièrement quantitatif de l'alésage percé avec précision pour détecter des erreurs d'opération de perçage de précision.

15. Installation d'usinage selon l'une quelconque des revendications 8 à 14, dans laquelle un dispositif de post-mesure (170) est prévu pour mesurer l'alésage rodé à l'issue de l'opération de rodage et pour générer au moins un signal de post-mesure, le dispositif de post-mesure (170) étant de préférence connecté par transmission de signaux à une commande de rodage (180) prévue pour commander les opérations de rodage et la commande de rodage étant configurée pour commander le fonctionnement du dispositif de rodage en fonction de signaux de post-mesure du dispositif de post-mesure.
